# EUROPÄISCHE PATENTSCHRIFT

(11) **EP 2 297 015 B1**
(45) Veröffentlichungstag und Bekanntmachung des Hinweises auf die Patenterteilung: **28.03.2012**
(21) Anmeldenummer: 09777015.0
(22) Anmeldetag: 07.07.2009
(51) Int. Cl.: B65H 29/58, F16H 35/14, F16H 25/18

(54) **ANTRIEBSVORRICHTUNG ZUM UMSCHALTEN MECHANISCHER ELEMENTE**
DRIVING DEVICE FOR SWITCHING MECHANICAL ELEMENTS
DISPOSITIF D'ENTRAÎNEMENT POUR LA COMMUTATION D'ÉLÉMENTS MÉCANIQUES

(30) Priorität: 07.07.2008 DE 102008032012
(43) Veröffentlichungstag der Anmeldung: 23.03.2011
(73) Patentinhaber: Wincor Nixdorf International GmbH, 33106 Paderborn (DE)
(72) Erfinder: JESCHKE, Andreas, 14624 Dallgow-Döberitz (DE)
(74) Vertreter: Schaumburg, Thoenes, Thurn, Landskron, Eckert
(86) Internationale Anmeldenummer: PCT/EP2009/004914
(87) Internationale Veröffentlichungsnummer: WO 2010/003644

(56) Entgegenhaltungen:
- DE-A1- 10 126 114
- FR-A1- 2 677 002
- JP-A- 60 258 059
- JP-A- 2002 128 311
- US-A- 4 752 845
- US-A- 4 822 018

## Beschreibung

Die Erfindung betrifft eine Antriebsvorrichtung zum Umschalten mechanischer Elemente zwischen einer ersten und einer zweiten Betriebsstellung, insbesondere zum Umschalten von Weichenelementen in Einrichtungen zum Transport von Blattmaterial, mit einem Kurbeltrieb, dessen Drehbewegung an einem Kurbelzapfen über einen Schwinghebel auf das zu betätigende mechanische Element übertragen wird.

Kurbeltriebe setzen eine Drehbewegung in eine Linearbewegung oder in eine Schwenkbewegung eines Hebels um. In Einrichtungen zum Transport von Blattmaterial, insbesondere in Maschinen zum Eingeben und/oder Ausgeben von Wertscheinen, werden als umschaltbare mechanische Elemente Weichenelemente verwendet, um den Weg des Blattmaterials umzusteuern bzw. eine von zwei oder mehr Richtungen für den Transport des Blattmaterials auszuwählen.

Einrichtungen zum Verarbeiten von Wertscheinen sind z. B. aus den Dokumenten DE 39 31 571 A1 und DE 698 00 638 T2 bekannt. Bei diesen Einrichtungen werden Weichen zum Umsteuern des Transportweges der Wertscheine durch Zahnradgetriebe oder Elektromagneten umgeschaltet. Solche Weichen können auch zwei unmittelbar nebeneinander liegende Weichenelemente haben. Das separate Antriebsprinzip für jede Weiche ist besonders dann aufwendig, wenn die Weichen verhältnismäßig selten umgestellt werden, z. B. Nur beim Einrichten einer Maschine, wenn diese den jeweiligen örtlichen Gegebenheiten angepasst wird und die Transportwege des Blattmaterials nur daran angepasst werden müssen.

Dies gilt insbesondere dann, wenn solche Einstellungen so zu steuern sind, dass mehrere mit Abstand zueinander angeordnete mechanische Elemente nicht unbedingt gleichzeitig, sondern wechselweise betätigt werden sollen, d. h. wenn entweder an einem ersten oder an einem zweiten Ort innerhalb einer Maschine derartige Schaltvorgänge auszulösen sind.

In solchen Fällen wäre eine Antriebsvorrichtung vorteilhaft, die an unterschiedlichen Stellen wirken und größere Abstände überbrücken kann.

US 4,822,018 offenbart eine Antriebsvorrichtung gemäß dem Oberbegriff des Anspruchs 1.

Es ist deshalb Aufgabe der Erfindung, eine Antriebsvorrichtung zum Umschalten mechanischer Elemente zwischen einer ersten und einer zweiten Betriebsstellung anzugeben, die wahlweise an einer ersten Position oder an einer zweiten Position der mechanischen Elemente nutzbar ist.

Die Erfindung löst diese Aufgabe bei einer Antriebsvorrichtung eingangs genannter Art dadurch, dass der Kurbeltrieb an einem Kurbelzapfen mit einem weiteren Schwinghebel gekoppelt ist, dass jeder Schwinghebel eine schlitzförmige Kulissenführung hat, und dass die beiden Kulissenführungen Steuerkurven haben, die bei einer Halbdrehung des Kurbeltriebes ausgehend von einer Ruhestellung in einer ersten Drehrichtung nur den einen Schwinghebel und bei einer Halbdrehung des Kurbeltriebes ausgehend von der Ruhestellung in der zweiten, zur ersten entgegengesetzten Drehrichtung nur den anderen Schwinghebel betätigen.

Die Erfindung beruht auf der Überlegung, dass zum wechselweisen Umschalten erster oder zweiter mechanischer Elemente ein Kurbeltrieb in der einen Drehrichtung nur die ersten mechanischen Elemente und in der anderen Drehrichtung nur die zweiten mechanischen Elemente betätigen kann und dabei jeweils eine Halbdrehung zum Umschalten eines mechanischen Elements zwischen einer ersten und einer zweiten Betriebsstellung ausreicht, so dass eine Dauerdrehung nicht nötig ist. Abhängig von der Drehrichtung des Kurbeltriebes wird also nur der eine oder nur der andere Schwinghebel betätigt, sodass damit die Auswahl des jeweiligen mechanischen Elements erfolgt. Der Schwinghebel kann jeweils auch über Zwischenglieder mit von dem Kurbeltrieb entfernten mechanischen Elementen gekoppelt sein, so dass es möglich ist, ein und dieselbe Antriebsvorrichtung zum wechselweisen Umschalten mit Abstand zueinander angeordneter mechanischer Elemente zu nutzen.

Für die Ausbildung des Kurbeltriebes mit Kurbelzapfen und die Wechselwirkung mit den Schwinghebeln gibt es unterschiedliche Möglichkeiten, beispielsweise den Einsatz jeweils eines Kurbelzapfens für jeden Schwinghebel. Vorteilhaft ist aber nur ein Kurbelzapfen mit beiden Schwinghebeln gekoppelt, so dass diese, in Längsrichtung des Kurbelzapfens gesehen, übereinander liegen. Dies ist möglich, weil entweder nur mechanische Elemente der ersten Art oder nur mechanische Elemente der zweiten Art umzuschalten sind. Die Steuerkurven der Kulissenführungen haben dann eine Form, durch die der Kurbelzapfen nur bei einer der beiden Drehrichtungen wirksam wird und den einen Schwinghebel bewegt, während er in der anderen Drehrichtung in der Kulissenführung dieses Schwinghebels leer läuft und nur den anderen Schwinghebel bewegt.

Demgemäß können die Steuerkurven der Schwinghebel jeweils einen geraden und einen mit der Kreisbahn des Kurbelzapfens konzentrischen halbkreisförmigen Abschnitt haben und zueinander spiegelverkehrt verlaufen, wobei sie zusammen eine Kreisschleife bilden. Abhängig davon, in welchem Abschnitt des gemeinsamen Verlaufs der Steuerkurven bzw. in welchem Teil der Kreisschleife der Kurbelzapfen des Kurbeltriebes steht, wird dann nur einer der beiden Schwinghebel betätigt und somit nur eines der zu verstellenden mechanischen Elemente zwischen einer ersten und einer zweiten Betriebsstellung umgeschaltet.

Weiterbildungen der Erfindung, die die erfindungsgemäße Lösung begünstigen, ergeben sich aus der folgenden Beschreibung eines Ausführungsbeispiels unter Bezugnahme auf die Zeichnung. Dieses Ausführungsbeispiel ist eine Antriebsvorrichtung zum Umschalten von Weichen in einer Einrichtung zum Transport von Blattmaterial.

Es zeigen:
- Figur 1: einen ersten Schwinghebel zum Betätigen eines Weichenelements oder einer Weiche,
- Figur 2: einen zweiten Schwinghebel zum Betätigen eines Weichenelements oder einer Weiche,
- Figur 3: die beiden Schwinghebel nach Figur 1 und Figur 2 in Kopplung mit einem Kurbeltrieb zum Betätigen zweier Weichen, die einen Abstand zueinander haben, in einer Ruhestellung,
- Figur 4: die Anordnung nach Figur 3 in einer Betriebsstellung zum Betätigen einer ersten Weiche mit dem ersten Schwinghebel,
- Figur 5: eine schematische Darstellung der Bewegungslinie eines Kurbelzapfens in zwei Kulissenführungen der Figur 3 und 4 gezeigten Anordnung,
- Figur 6: den bei der Anordnung nach Figur 3 und 4 verwendeten Kurbeltrieb mit einer am Umfang der Kurbelscheibe vorgesehenen Schaltfahne in Zuordnung zu einer Gabellichtschranke für eine Ruhestellung,
- Figur 7: die Anordnung nach Figur 6 in einer ersten Betriebsstellung, und
- Figur 8: die Anordnung nach Figur 6 in einer zweiten Betriebsstellung.

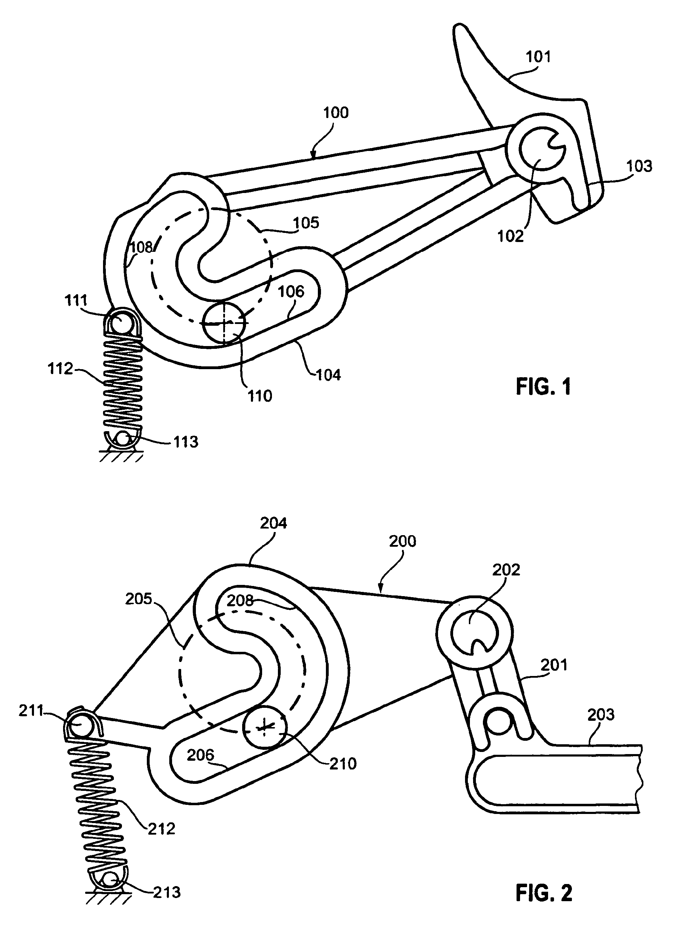

In Figur 1 ist ein Schwinghebel 100 dargestellt, der zum Betätigen eines Weichenelements 101 dient, das zu einer Einrichtung zum Transport von Blattmaterial gehört und dazu dient, den Weg einzelner transportierter Blätter zu bestimmen, indem es von einer in Figur 1 dargestellten ersten Betriebsstellung um seine Schwenkachseachse 102 im Uhrzeigersinn geschwenkt und in eine zweite Betriebsstellung umgeschaltet wird. Diese Schwenkbewegung wird durch den Schwinghebel 100 erzeugt, und während der Schwenkbewegung kann ein an dem Weichenelement 101 vorgesehener Hebelarm 103 in noch zu beschreibender Weise ein weiteres Weichenelement betätigen, das mit dem Weichenelement 101 eine Weiche bildet, wie sie für den Transport von Blattmaterial an sich bekannt ist.

Der Schwinghebel 100 hat an seinem in Figur 1 linken Teil eine Kulissenführung 104, an der er durch einen Kurbelzapfen 110 bewegt werden kann, wenn sich dieser mit einem hier nicht dargestellten Kurbeltrieb auf einer Kreisbahn 105 bewegt, die in Figur 1 strichpunktiert dargestellt ist. Eine zum Verschwenken des Schwinghebels um seine Schwenkachse 102 erforderliche Bewegung des Kurbelzapfens 110 muss ausgehend von der in Figur 1 dargstellten Ruhestellung im Gegenuhrzeigersinn gerichtet sein, denn dann gelangt der Kurbelzapfen 110 in einen geraden Abschnitt 106 der Kulissenführung 104 und verschwenkt den Schwinghebel 100 gegenüber der in Figur 1 gezeigten Ruhestellung nach oben. Die Kulissenführung 104 hat auch einen etwa halbkreisförmig konzentrisch mit der Kreisbahn des Kurbelzapfens 110 gekrümmten Abschnitt 108. Wenn sich der Kurbelzapfen 110 ausgehend von der in Figur 1 gezeigten Ruhestellung im Uhrzeigersinn bewegt, so wird der Schwinghebel 100 nicht verschwenkt und behält seine in Figur 1 dargestellte Lage, in der er durch eine an einem Aufhängepunkt 111 aufgehängte Feder 112 gehalten wird, die mit ihrem anderen Ende an einem Verankerungspunkt 113 ortsfest verankert ist.

In Figur 2 ist ein weiterer Schwinghebel 200 dargestellt, der um eine Schwenkachse 202 schwenkbar ist und dabei einen Hebelarm 201 verstellt. Dieser ist mit einem Schieber 203 gekoppelt, der auf hier nicht näher dargestellte Weise eine entfernte Weiche betätigen kann, die ähnlich wie das Weichenelement 101 (Figur 1) ausgebildet sein bzw. aus zwei Weichenelementen bestehen kann. Der Schwinghebel 200 hat eine Kulissenführung 204 mit einem geraden Abschnitt 206 und einem etwa halbkreisförmig konzentrisch mit der Kreisbahn 205 eines Kurbelzapfens 210 gekrümmten Abschnitt 208.

Der Schwinghebel 200 wird in der in Figur 2 gezeigten Lage mittels einer Feder 212 gehalten, die an einem Aufhängepunkt 211 mit ihm verbunden und an einem Verankerungspunkt 213 ortsfest verankert ist. Wenn der Kurbelzapfen 210 ausgehend von der in Figur 2 gezeigten Ruhestellung im Uhrzeigersinn bewegt wird, so gelangt er in den geraden Abschnitt 206 der Kulissenführung 204 und schwenkt den Schwinghebel 200 gegenüber der in Figur 2 gezeigten Ruhestellung gegen die Kraft der Feder 212 aufwärts. Wird der Kurbelzapfen 210 gegenüber der in Figur 2 gezeigten Ruhestellung im Gegenuhrzeigersinn bewegt, so behält der Schwinghebel 200 seine in Figur 2 gezeigte Lage, denn dann bewegt sich der Kurbelzapfen 210 in dem halbkreisförmig gekrümmten Abschnitt 208 der Kulissenführung 204.

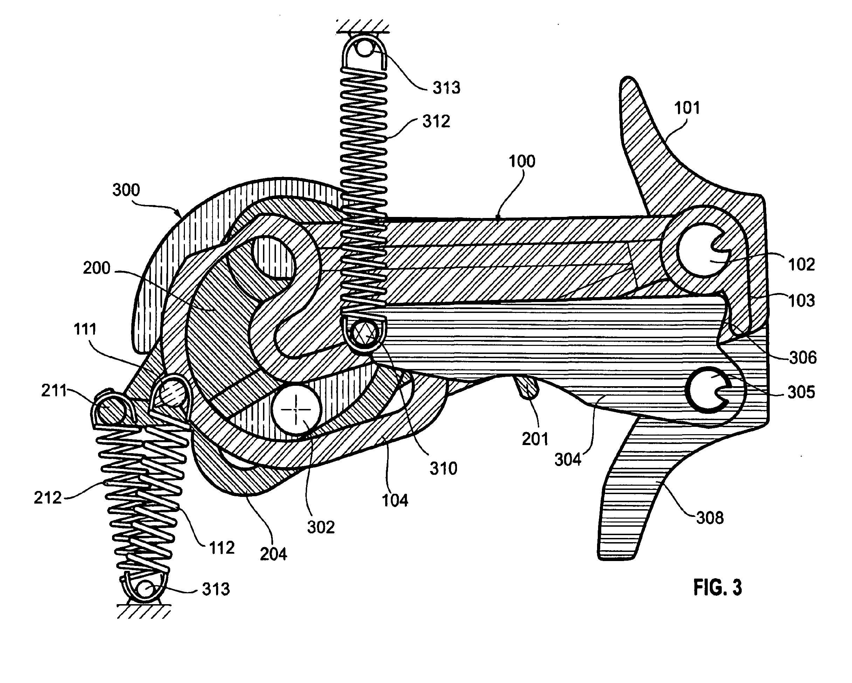

In Figur 3 ist eine mögliche gegenseitige Zuordnung der beiden vorstehend beschriebenen Schwinghebel 100 und 200 in Verbindung mit einem Kurbeltrieb 300 dargestellt. Der Kurbeltrieb 300 hat nur einen Kurbelzapfen 302, der in den beiden Kulissenführungen 104 und 204 der beiden Schwinghebel 100 und 200 geführt ist, so dass diese in Längsrichtung des Kurbelzapfens 302 übereinander liegen. Wie bereits beschrieben, wird bei einer Bewegung des Kurbelzapfens 302 aus der in Figur 3 dargestellten Ruhestellung im Gegenuhrzeigersinn der Schwinghebel 100 aufwärts verstellt, während bei einer Drehung des Kurbelzapfens 302 im Uhrzeigersinn der Schwinghebel 200 entsprechend verstellt wird. Dabei werden einerseits zwei Weichenelemente 101 und 308 betätigt, anderseits wird mit dem Schwinghebel 200 über dessen Hebelarm 201 und den hier nicht dargestellten Schieber 203 (Figur 2) eine weitere Weiche betätigt, die sich an einer zu den beiden Weichenelementen 101 und 308 entfernten Stelle innerhalb der Transporteinrichtung befindet. Die Umschaltung erfolgt wechselweise, d.h. eine Weiche muss nach ihrer Umschaltung zurückgeschaltet werden, bevor die andere Weiche umgeschaltet werden kann.

Bei der in Figur 3 gezeigten Anordnung ist das weitere Weichenelement 308 mit einem Betätigungshebel 304 verbunden, der mit dem Hebelarm 103 des Schwinghebels 100 an einem eigenen Hebelarm 306 gekoppelt ist und bei einer Aufwärtsbewegung des Schwinghebels 100 um seine Schwenkachse 305 im Gegenuhrzeigersinn gegen die Kraft einer Feder 313 verschwenkt wird, die an einem Aufhängepunkt 310 mit dem Betätigungshebel 304 verbunden und am anderen Ende an einem ortsfesten Verankerungspunkt 313 verankert ist. Das Weichenelement 308 wird bei einer solchen Betätigung im Gegenuhrzeigersinn verstellt, während das Weichenelement 101 im Uhrzeigersinn verstellt wird.

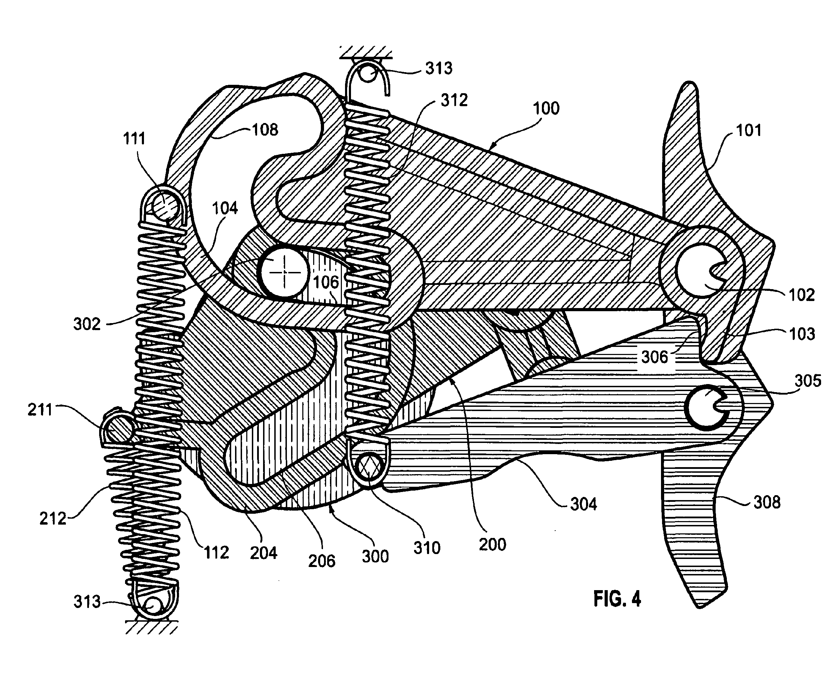

In Figur 4 ist die Anordnung nach Figur 3 dargestellt, nachdem der Kurbeltrieb 300 und damit der Kurbelzapfen 302 um etwa eine halbe Umdrehung im Gegenuhrzeigersinn verstellt wurde. Dadurch wurde der Schwinghebel 100 gegen die Kraft der Feder 112 aufwärts geschwenkt, während gleichzeitig der Betätigungshebel 304 durch die Kopplung an den beiden Hebelarmen 103 und 306 abwärts geschwenkt wurde. In dieser Stellung des Schwinghebels 100 sind die beiden Weichenelemente 101 und 308 in eine zweite Betriebsstellung umgeschaltet. In dieser zweiten Betriebsstellung können sie ein an ihnen vorbeigeführtes Blattmaterial auf seinem Transportweg gegenüber einer vorherigen Transportrichtung umlenken.

Der Kurbelzapfen 302 bewegte sich im Gegenuhrzeigersinn in dem gekrümmten Abschnitt 208 der Kulissenführung 204 des zweiten Schwinghebels 200, so dass dieser nicht verstellt wurde. Um eine solche Verstellung zu erreichen, muss der Kurbelzapfen 302 aus der in Figur 4 gezeigten Lage zunächst im Uhrzeigersinn abwärts bewegt werden, bis er in den geraden Abschnitt 206 der Kulissenführung 204 des zweiten Schwinghebels 200 kommt. Bei seiner Weiterbewegung kann er dann den zweiten Schwinghebel 200 nach oben verstellen, nachdem zuvor der erste Schwinghebel 100 wieder in seine in Figur 3 gezeigte Ruhestellung gekommen ist.

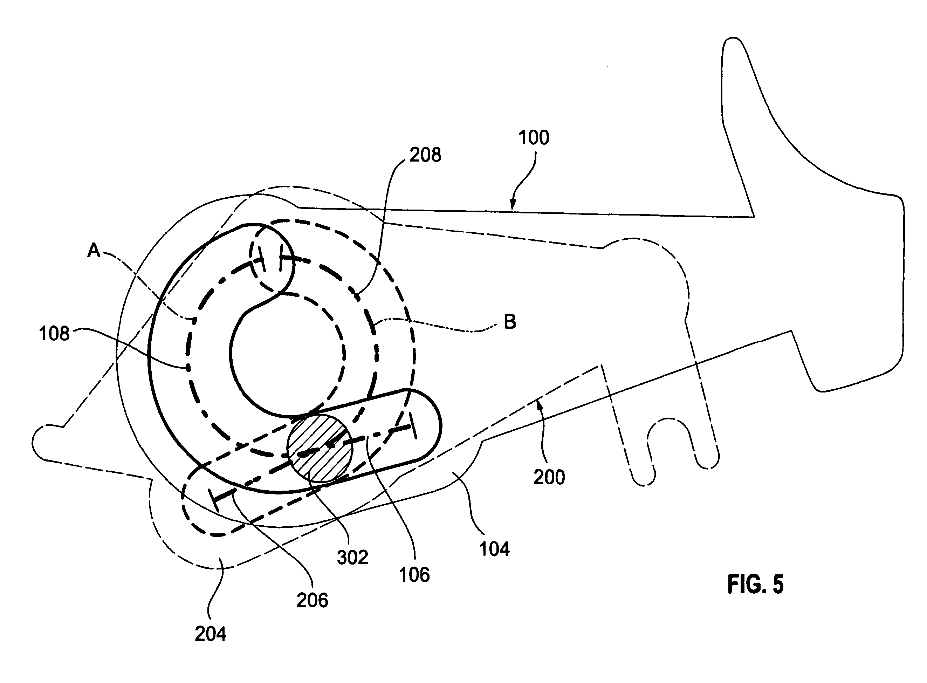

In Figur 5 ist die gegenseitige Zuordnung der beiden Schwinghebel 100 und 200 schematisch dargestellt, wobei die durch die Steuerkurven der beiden Kulissenführungen 104 und 204 erzeugte Bewegungslinie des Kurbelzapfens 302 relativ zu den Kulissenführungen 104 und 204 strichpunktiert gezeigt ist. Diese Bewegungslinie bildet eine Kreisschleife mit Abschnitten A und B, die jeweils aus einem geraden Abschnitt 106 bzw. 206 und einem halbkreisförmigen, mit der Kreisbahn des Kurbelzapfens 302 konzentrischen Abschnitt 108 bzw. 208 bestehen. Der Kurbelzapfen 302 durchläuft also einerseits die durch den Abschnitt A gebildete Steuerkurve, andererseits die durch den Abschnitt B gebildete Steuerkurve und hat seine Ruhestellung im Schnittpunkt beider Steuerkurven. Dabei wird entweder der Schwinghebel 100 oder aber der Schwinghebel 200 verstellt. Die Wahl, welcher Schwinghebel 100 oder 200 verstellt werden soll, wird durch die Bewegungsrichtung des Kurbelzapfens 302 aus der Ruhestellung vorgegeben. Der dabei verstellte Schwinghebel 100 bzw. 200 muss zunächst wieder in seine Ruhestellung zurückgebracht werden, indem der Kurbelzapfen 302 zurückbewegt wird, bevor der andere Schwinghebel 200 bzw. 100 verstellt werden kann.

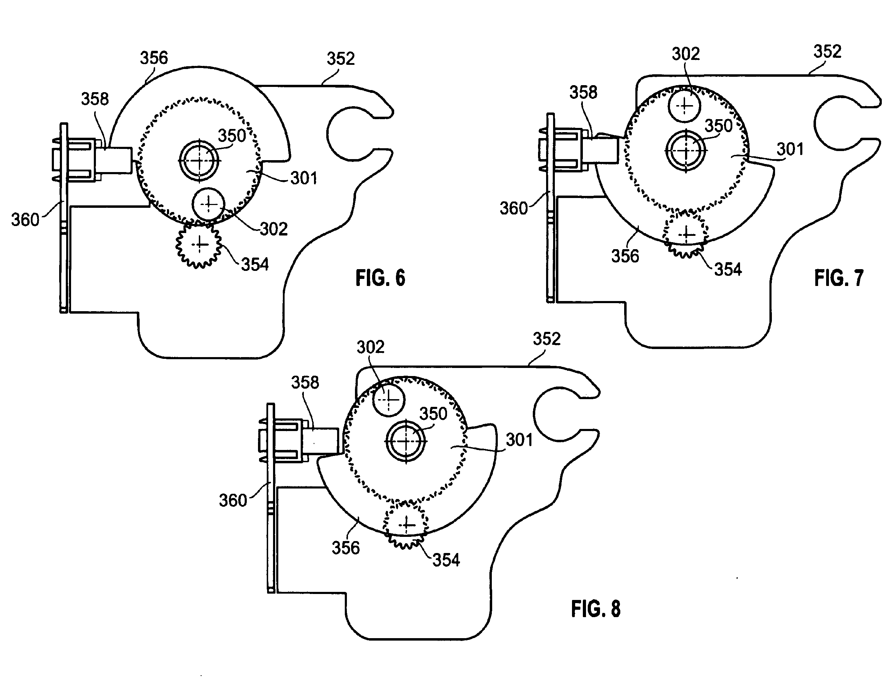

In Figur 6 ist schematisch der Kurbeltrieb 300 ohne die beiden Schwinghebel 100 und 200 dargestellt. Der Kurbeltrieb 300 ist an einer Platine 352 gelagert und enthält eine Kurbelscheibe 301, auf der der Kurbelzapfen 302 exzentrisch befestigt ist. Die Kurbelscheibe 301 wird mit einem Ritzel 354 angetrieben, das auf der Welle eines hier nicht dargestellten Antriebsmotors sitzt. Die Kurbelscheibe 301 dreht sich auf einer Achse 350.

Die Kurbelscheibe 301 trägt an ihrem Umfang über einen Bereich von etwa 180° eine Schaltfahne 356, die durch eine Gabellichtschranke 358 läuft, welche an einer Seitenwand 360 der Platine 352 befestigt ist. In dem in Figur 6 gezeigten Zustand hat der Kurbeltrieb 300 seine Ruhestellung, und ein Ende der Schaltfahne 356 liegt auf der Ja/Nein-Position in der Gabellichtschranke 358. Soll der Schwinghebel 100 (Figur 1) durch den Kurbeltrieb 300 betätigt werden, so wird die Kurbelscheibe 301 im Gegenuhrzeigersinn über einen Winkelbereich von etwa 170° gedreht, und dadurch wird die in Figur 7 gezeigte Stellung erreicht. Während der Drehung hat die Gabellichtschranke 358 z.B. ein Ja-Signal abgegeben, das auch über die gesamte Rückdrehung des Kurbeltriebs 300 im Uhrzeigersinn erhalten bleibt, bis wieder die in Figur 6 gezeigte Position erreicht wird. Während dieser Drehung im Gegenuhrzeigersinn und der Rückdrehung im Uhrzeigersinn war der Schwinghebel 100 betätigt, wodurch die mit ihm gekoppelte Weiche 101, 308 geschaltet wurde. Wird als Antriebsquelle für den Kurbeltrieb 300 ein Schrittmotor verwendet, so können die auf eine Drehung über den Bereich von 170° entfallenden Schrittimpulse gezählt werden, so dass dadurch jederzeit die Position des Kurbeltriebes 300 erfasst werden kann. Wenn der Kurbeltrieb 300 wieder seine in Figur 6 gezeigte Ruhestellung erreicht, wird von der Gabellichtschranke 358 das Ja/Nein-Signal erhalten, bei dessen Auftreten eine vorbestimmte Anzahl von Bewegungsschritten erreicht sein muss. Stimmt die tatsächlich erfasste Anzahl nicht mit der vorbestimmten Anzahl überein, so wird dadurch eine mechanische Störung signalisiert, die umgehend behoben werden kann.

In Figur 8 ist der Kurbeltrieb 300 in einer Position dargestellt, die sich nach einer Drehung ausgehend von der in Figur 6 dargestellten Ruhestellung über etwa 170° im Uhrzeigersinn ergibt. Während dieser Drehung gibt die Gabellichtschanke 358 ein Nein-Signal ab, da die Schaltfahne 356 ihre Schaltstrecke nicht durchläuft. Da die Drehung nur über einen Winkel von etwa 170° erfolgt, wird sie auch bei Erreichen der Endstellung nicht in die Schaltstrecke der Gabellichtschranke 358 kommen. Das Nein-Signal wird also für diesen Zustand aufrecht erhalten und fortgesetzt, wenn der Kurbeltrieb 300 im Gegenuhrzeigersinn zurück in seine Ruhestellung gebracht wird. Bei dieser Vor- und Zurückdrehung wurde der Schwinghebel 200 (Figur 2) betätigt, um über den mit ihm gekoppelten Schieber 203 eine Weiche umzuschalten, die sich an einer von der Antriebsvorrichtung entfernten Stelle befindet.

### Bezugszeichenliste

- 100: Schwinghebel
- 101: Weichenelement
- 102: Schwenkachse
- 103: Hebelarm
- 104: Kulissenführung
- 105: Kreisbahn
- 106: gerader Abschnitt
- 108: gekrümmter Abschnitt
- 110: Kurbelzapfen
- 111: Aufhängepunkt
- 112: Feder
- 113: Verankerungspunkt
- 200: Schwinghebel
- 201: Hebelarm
- 202: Schwenkachse
- 203: Schieber
- 204: Kulissenführung
- 205: Kreisbahn
- 206: gerader Abschnitt
- 208: gekrümmter Abschnitt
- 211: Aufhängepunkt
- 212: Feder
- 213: Verankerungspunkt
- 300: Kurbeltrieb
- 301: Kurbelscheibe
- 302: Kurbelzapfen
- 304: Betätigungshebel
- 305: Schwenkachse
- 306: Hebelarm
- 308: Weichenelement
- 310: Aufhängepunkt
- 312: Feder
- 313: Verankerungspunkt
- 350: Achse
- 352: Platine
- 354: Ritzel
- 356: Schaltfahne
- 358: Gabellichtschranke
- A: Abschnitt
- B: Abschnitt

## Patentansprüche

1. Antriebsvorrichtung zum Umschalten mechanischer Elemente zwischen einer ersten und einer zweiten Betriebsstellung, insbesondere zum Umschalten von Weichenelementen in Einrichtungen zum Transport von Blattmaterial, mit einem Kurbeltrieb, dessen Drehbewegung an einem Kurbelzapfen über einen Schwinghebel auf das zu betätigende mechanische Element übertragen wird, wobei der Kurbeltrieb (300) an einem Kurbelzapfen (110) mit einem weiteren Schwinghebel (200) gekoppelt ist, **dadurch gekennzeichnet, dass** jeder Schwinghebel (100, 200) eine schlitzförmige Kulissenführung (104, 204) hat, und dass die beiden Kulissenführungen (104, 204) Steuerkurven (106, 108, 206, 208) haben, die bei einer Halbdrehung des Kurbeltriebes (300) ausgehend von einer Ruhestellung in einer ersten Drehrichtung nur den einen Schwinghebel (100) und bei einer Halbdrehung des Kurbeltriebes (300) ausgehend von der Ruhestellung in der zweiten, zur ersten entgegengesetzten Drehrichtung nur den anderen Schwinghebel (200) betätigen.

2. Antriebsvorrichtung nach Anspruch 1, **dadurch gekennzeichnet, dass** ein Kurbelzapfen (110, 302) mit beiden Schwinghebeln (100, 200) gekoppelt ist.

3. Antriebsvorrichtung nach Anspruch 1 oder 2, **dadurch gekennzeichnet, dass** jede Steuerkurve (A, B) einen geraden (106, 206) und einen mit der Kreisbahn (105, 205) des Kurbelzapfens (110) konzentrischen halbkreisförmigen Abschnitt (108, 208) hat, und dass die Steuerkurven (A, B)zueinander spiegelverkehrt verlaufen und zusammen eine Kreisschleife bilden.

4. Antriebsvorrichtung nach Anspruch 3, **dadurch gekennzeichnet, dass** der Kurbelzapfen (110) in seiner Ruhestellung im Schnittpunkt der beiden Steuerkurven (A, B) liegt.

5. Antriebsvorrichtung nach einem der vorhergehenden Ansprüche, zum Umschalten von Weichen im Transportweg von Blattmaterial, **dadurch gekennzeichnet, dass** der erste Schwinghebel (100) an seiner Schwenkachse (102) mit einem ersten Weichenelement (101) und über einen Hebelarm (103) mit einem zweiten Weichenelement (308) gekoppelt ist.

6. Antriebsvorrichtung nach einem der vorhergehenden Ansprüche, **dadurch gekennzeichnet, dass** der Kurbeltrieb (300) eine Kurbelscheibe (301) enthält, auf der der Kurbelzapfen (302) exzentrisch angeordnet ist und die über einen Umfangsbereich von 180° mit einer Schaltfahne (356) versehen ist, welche durch eine Gabellichtschranke (358) geführt ist.

7. Antriebsvorrichtung nach Anspruch 6, **dadurch gekennzeichnet, dass** die Gabellichtschranke (358) mit einer Vorrichtung zum Auswerten der Bewegung der Schaltfahne (356) verbunden ist, welche die auf eine Drehbewegung der Kurbelscheibe (301) entfallende Anzahl von Impulsen einer Impulsquelle zählt.

8. Antriebsvorrichtung nach Anspruch 6 oder 7, **dadurch gekennzeichnet, dass** die Halbdrehung des Kurbeltriebs (300) jeweils über einen Bereich von etwa 170° erfolgt, der durch Abzählen der Antriebsimpulse eines Schrittmotors für den Kurbeltrieb (300) bemessen wird.

9. Antriebsvorrichtung nach einem der vorhergehenden Ansprüche, **dadurch gekennzeichnet, dass** der Kurbeltrieb (300) mit einem Schrittmotor gekoppelt ist.

## Claims

1. A driving device for switching mechanical elements between a first and a second operating position, in particular for switching distributing guide elements in devices for the transport of sheet material, comprising a crank mechanism whose rotary motion is transferred at a crank pin via a rocker arm to the mechanical element to be actuated, wherein the crank mechanism (300) is coupled at a crank pin (110) to a further rocker arm (200), **characterized in that** each rocker arm (100, 200) has a slot-shaped sliding guide (104, 204), and **in that** the two sliding guides (104, 204) have control cams (106, 108, 206, 208) which upon a half-rotation of the crank mechanism (300) in a first direction of rotation starting out from an idle position only actuate the one rocker arm (100) and upon a half-rotation of the crank mechanism (300) in the second direction of rotation opposite to the first direction starting out from the idle position only actuate the other rocker arm (200).

2. The driving device according to claim 1, **characterized in that** a crank pin (110, 302) is coupled to both rocker arms (100, 200).

3. The driving device according to claim 1 or 2, **characterized in that** each control cam (A, B) has a straight section (106, 206) and a semicircular section (108, 208) that is concentric to the circular path (105, 205) of the crank pin (110), and **in that** the control cams (A, B) extend in a mirror-inverted manner relative to each other and together form a circular loop.

4. The driving device according to claim 3, **characterized in that**, in its idle position, the crank pin (110) lies in the point of intersection of the two control cams (A, B).

5. The driving device according to one of the preceding claims, for switching distributing guides in the transport path of sheet material, **characterized in that** the first rocker arm (100) is coupled at its pivot axis (102) to a first distributing guide element (101) and via a lever arm (103) to a second distributing guide element (308).

6. The driving device according to one of the preceding claims, **characterized in that** the crank mechanism (300) includes a crank disk (301) on which the crank pin (302) is eccentrically arranged and which is provided with a switching tag (356) over a circumferential area of 180°, which is guided through a fork light barrier (358).

7. The driving device according to claim 6, **characterized in that** the fork light barrier (358) is connected to a device for evaluating the movement of the switching tag (356), which counts the number of pulses of a pulse source that correspond to a rotary motion of the crank disk (301).

8. The driving device according to claim 6 or 7, **characterized in that** each half-rotation of the crank mechanism (300) takes place over an area of about 170°, which is measured by counting the driving pulses of a stepper motor for the crank mechanism (300).

9. The driving device according to one of the preceding claims, **characterized in that** the crank mechanism (300) is coupled to a stepper motor.

## Revendications

1. Dispositif d'entraînement pour commuter des éléments mécaniques entre une première position de fonctionnement et une seconde position de fonctionnement, notamment pour commuter des éléments d'aiguillage dans des installations de transport de matériaux en feuille, ledit dispositif d'entraînement comportant une commande à manivelle dont le mouvement de rotation est transmis au niveau d'un maneton de manivelle à l'élément mécanique à actionner par le biais d'un levier oscillant, la commande à manivelle (300) étant couplée au niveau d'un maneton de manivelle (110) à un autre levier oscillant (200), **caractérisé en ce que** chaque levier oscillant (100, 200) possède un guide de coulisse (104, 204) en forme de fente, et **en ce que** les deux guides de coulisse (104, 204) possèdent des cames de commande (106, 108, 206, 208) qui, lors d'une demi-rotation de la commande à manivelle (300) dans un premier sens de rotation à partir d'une position de repos, n'actionne qu'un levier oscillant (100) et, lors d'une demi-rotation de la commande à manivelle (300) dans le second sens de rotation opposé au premier à partir de la position de repos, n'actionne que l'autre levier oscillant (200).

2. Dispositif d'entraînement selon la revendication 1, **caractérisé en ce qu'**un maneton de manivelle (110, 302) est couplé aux deux leviers oscillants (100, 200).

3. Dispositif de commande selon la revendication 1 ou 2, **caractérisé en ce que** chaque came de commande (A, B) possède une portion rectiligne (106, 206) et une portion semi-circulaire (108, 208) concentrique à la trajectoire (105, 205) du maneton de manivelle (110), et **en ce que** les cames de commande (A, B) s'étendent symétriquement l'une à l'autre et forment conjointement une boucle circulaire.

4. Dispositif d'entraînement selon la revendication 3, **caractérisé en ce que** le maneton de manivelle (110) se trouve dans sa position de repos à l'intersection des deux cames de commande (A, B).

5. Dispositif d'entraînement selon l'une des revendications précédentes, destiné à commuter des aiguillages dans le chemin de transport d'un matériau en feuille, **caractérisé en ce que** le premier levier oscillant (100) est couplé au niveau de son premier axe d'oscillation (102) à un premier élément d'aiguillage (101) et par le biais d'un bras de levier (103) à un second élément d'aiguillage (308).

6. Dispositif d'entraînement selon l'une des revendications précédentes, **caractérisé en ce que** la commande à manivelle (300) contient un flasque de manivelle (301) sur lequel le maneton de manivelle (302) est disposé de façon excentrique et qui est doté d'une came de contacteur (356) sur une plage de 180°, la came de contacteur étant conduite dans une barrière lumineuse à fourche (358).

7. Dispositif d'entraînement selon la revendication 6, **caractérisé en ce que** la barrière lumineuse à fourche (358) est reliée à un dispositif d'exploitation du mouvement de la came de contacteur (356) qui compte le nombre d'impulsions d'une source d'impulsions correspondant à un mouvement de rotation du flasque de manivelle (301).

8. Dispositif d'entraînement selon la revendication 6 ou 7, **caractérisé en ce que** la demi-rotation de la commande à manivelle (300) est effectuée à chaque fois sur une plage d'environ 170° qui est mesurée en comptant les impulsions de commande d'un moteur pas à pas destiné à la commande à manivelle (300).

9. Dispositif d'entraînement selon l'une des revendications précédentes, **caractérisé en ce que** la commande à manivelle (300) est couplée à un moteur pas à pas.
